# EUROPÄISCHE PATENTSCHRIFT

(11) **EP 0 831 663 B1**
(45) Veröffentlichungstag und Bekanntmachung des Hinweises auf die Patenterteilung: **09.09.2009**
(21) Anmeldenummer: 97113090.1
(22) Anmeldetag: 30.07.1997
(51) Int. Cl.: H04W 76/02

(54) **Verfahren zur drahtlosen Übertragung von digitalen Daten**
Method for wireless transmission of digital data
Procédé de transmission de données numériques sans fil

(30) Priorität: 20.09.1996 DE 19638814
(43) Veröffentlichungstag der Anmeldung: 25.03.1998
(73) Patentinhaber: Ericsson AB, Stockholm (SE)
(72) Erfinder: Radimirsch, Markus, 30880 Laatzen (DE); Fettweis, Gerhard, Prof., 01324 Dresden (DE); Kühne, Jörg, 01099 Dresden (DE); Stantchev, Branimir, 01307 Dresden (DE)
(74) Vertreter: Manitz, Finsterwald & Partner GbR

(56) Entgegenhaltungen:
- EP-A- 0 700 225
- YUAN R ET AL: "A SIGNALING AND CONTROL ARCHITECTURE FOR MOBILITY SUPPORT IN WIRELESS ATM NETWORKS" 1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996, Bd. 1, 23. Juni 1996 (1996-06-23), Seiten 478-484, XP000625718 INSTITUTE OF ELECTRICAL & ELECTRONICS ENGINEERSISBN: 0-7803-3251-2
- SAITO Y ET AL: "LAYERED CELL STRUCTURE FOR MOBILE ATM NETWORKS" 1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996, Bd. 3, 23. Juni 1996 (1996-06-23), Seiten 1254-1257, XP000625013 INSTITUTE OF ELECTRICAL & ELECTRONICS ENGINEERSISBN: 0-7803-3251-2

## Beschreibung

### Stand der Technik

Die Erfindung geht aus von einem Verfahren zur drahtlosen Übertragung von digitalen Daten, sowie einer Telekommunikationsanlage nach der Gattung der unabhängigen Ansprüche. Ein derartiges Verfahren sowie eine derartige Anlage sind aus der EP-A-0 700 225 bekannt.

Es ist schon ein Verfahren zur drahtlosen Übertragung von digitalen Daten bekannt. Hierbei handelt es sich um das sogenannte DECT-Verfahren, wie es beispielsweise in der Funkschau, Heft 11/96, Seiten 40ff, beschrieben wird. Dieses Verfahren wird angewandt, wenn eine in der Regel stationäre Sende-/Empfangseinheit mit mehreren beweglichen Sende/Empfangseinheiten scheinbar gleichzeitig eine Verbindung zur drahtlosen Übertragung von Daten aufrechterhalten soll. Hierzu wird ein vorgegebenes Zeitintervall in beispielsweise 24 Zeitschlitze unterteilt, wobei die ersten 12 Zeitschlitze für das Aussenden von Daten von der stationären Sende/Empfangseinheit vorgesehen sind, die zweiten 12 Zeitschlitze für den Empfang von Daten durch die stationäre Sende-/Empfangseinheit vorgesehen sind. Jeder mobilen Sende/Empfangseinheit wird je ein Zeitschlitz aus den ersten 12 Zeitschlitzen und ein Zeitschlitz aus den zweiten 12 Zeitschlitzen zugeordnet, so daß ein Zeitmultiplexverfahren realisiert wird, wobei für jede mögliche Verbindung die gleiche Bandbreite und die gleiche Übertragungszeit vorgesehen ist, was somit in einer festgelegten Übertragungsrate resultiert.

Weiterhin ist zur drahtgebundenen Übertragung von digitalen Nutzdaten das ATM-Verfahren (ATM = Asynchronous Transfer Mode) bekannt, wie es beispielsweise aus der Zeitschrift Funkschau, Heft 7/95, Seite 40 bekannt ist. Nutzdaten, welche von einem Datensender stammen und für einen Datenempfänger bestimmt sind, werden in Pakete von 48 Byte Länge aufgeteilt und mit einem Header von 5 Byte Länge versehen. Der Header beinhaltet Informationen über den Datensender und den Datenempfänger, sowie Information, welche zur Leitung der Pakete zum Datenempfänger benötigt wird. Die Kombination aus Paket und Header wird auch Zelle genannt. Die Übertragung einer Zelle über eine Leitung erfolgt dann, wenn freie Leitungskapazität vorhanden ist. Somit läßt sich die verfügbare Bandbreite flexibel auf einzelne Netzteilnehmer verteilen.

Im Gegensatz zu anderen paketorientierten Verfahren zu Datenübertragung, wie sie beispielsweise aus der Computertechnik bekannt sind, ist die Zellenlänge festgelegt und auf den Übertragungswegen fließt ein kontinuierlicher Datenstrom, der, falls nicht genügend Daten zu übertragen sind, mit Leerzellen aufgefüllt wird. Vor Beginn einer Datenübertragung wird ein günstiger Weg, welcher freie Kapazität aufweisen kann, festgelegt, auf dem dann alle Zellen transportiert werden, indem sie Leerzellen ersetzen. Fehlerkorrektur für gesendete Pakete und Information zum richtigen Zusammensetzen der Zellen zu Nutzdaten beim Empfänger, wie es vom Ethernet bekannt ist, entfällt somit.

In der EP-A-0 700 225 ist ein Datenübertragungssystem beschrieben, bei dem sowohl ein breitbandiger als auch ein schmalbandiger Kanal verwendet wird, wobei der schmalbandige Kanal für den Zugang zum breitbandigen Kanal vorgesehen ist. Dieser Druckschrift kann nicht entnommen werden, wie das System vorteilhaft in Verbindung mit dem ATM-Verfahren eingesetzt werden könnte.

Der Erfindung liegt die Aufgabe zugrunde, ein verbessertes Verfahren sowie eine verbesserte Telekommunikationsanlage der eingangs genannten Art zu schaffen.

Gemäß der Erfindung wird diese Aufgabe gelöst durch die kennzeichnenden Merkmale des Anspruchs 1 bzw. 7.

Das erfindungsgemäße Verfahren hat den Vorteil, daß durch die Verwendung eines separaten schmalbandigen Signalisierungskanals eine Modulationsart gewählt werden kann, welche unempfindlich gegenüber der Dopplerverschiebung der Trägerfrequenz aufgrund der Bewegung einer Sende/Empfangseinheit ist.

Zusätzlich können auf dem zweiten Funkkanal auch Daten übertragen werden, die einen effektiven Stromsparmodus wenigstens einer der Sende-/Empfangseinheiten ermöglichen. Durch die in den abhängigen Ansprüchen aufgeführten Maßnahmen sind vorteilhafte Weiterbildungen und Verbesserungen des im Anspruch 1 angegebenen Verfahrens möglich. Besonders vorteilhaft ist es beispielsweise, den ersten Funkkanal breitbandig auszubilden, und den zweiten Funkkanal schmalbandig auszubilden, da somit die Bandbreite optimal an die zu erwartenden Datenübertragungsraten angepaßt wird.

Weiterhin ist es vorteilhaft, die übertragenen Pakete mit ihrem Header als ATM-Zellen auszubilden, da somit keine Umsetzung der Datenstruktur im Leitungs-/Funkinterface notwendig ist, das die Datenübertragungsrate verbessert.

Die erfindungsgemäße Telekommunikationsanlage hat den Vorteil, daß sie die flexible Anpassung der Übertragungsrate mit räumlicher Beweglichkeit der Sende/Empfangseinheiten kombiniert. Eine solche Kombination ermöglicht neue Dienste, beispielsweise Multimediadienste, für mobile Sende-/Empfangseinheiten. Durch die in den abhängigen Ansprüchen aufgeführten Maßnahmen sind vorteilhafte Weiterbildungen und Verbesserungen der erfindungsgemäßen Telekommunikationsanlage möglich. So ist es besonders vorteilhaft, den ersten Funkkanal, über welchen die Nutzdaten übertragbar sind breitbandig auszulegen, um somit eine hohe Übertragungsrate zu erzielen, wohingegen für die Verwaltung der drahtlosen Übertragung ein schmalbandiger zweiter Funkkanal ausreichend ist.

Es ist vorteilhaft, eine der Sende-/Empfangseinheiten als stationäre Einheit vorzusehen, und mit einem Anschluß für eine leitungsgebundene Übertragung zu versehen, da somit eine Anbindung der Telekommunikationsanlage an ein leitungsgebundenes breitbandiges Netz, vorzugsweise ein ATM-Netz, bewirkbar ist.

### Zeichnung

Ein Ausführungsbeispiel der Erfindung ist in der Zeichnung dargestellt und wird in der nachfolgenden Beschreibung näher erläutert. Es zeigen Figur 1 eine ATM-Zelle, Figur 2 eine Telekommunikationsanlage, Figur 3 eine erfindungsgemäße Aufteilung des Frequenzbandes, Figur 4 einen Zellenstrom, Figur 5 eine zweite erfindungsgemäße Aufteilung des Frequenzbandes und Figur 6 eine zweite Telekommunikationsanlage.

### Beschreibung

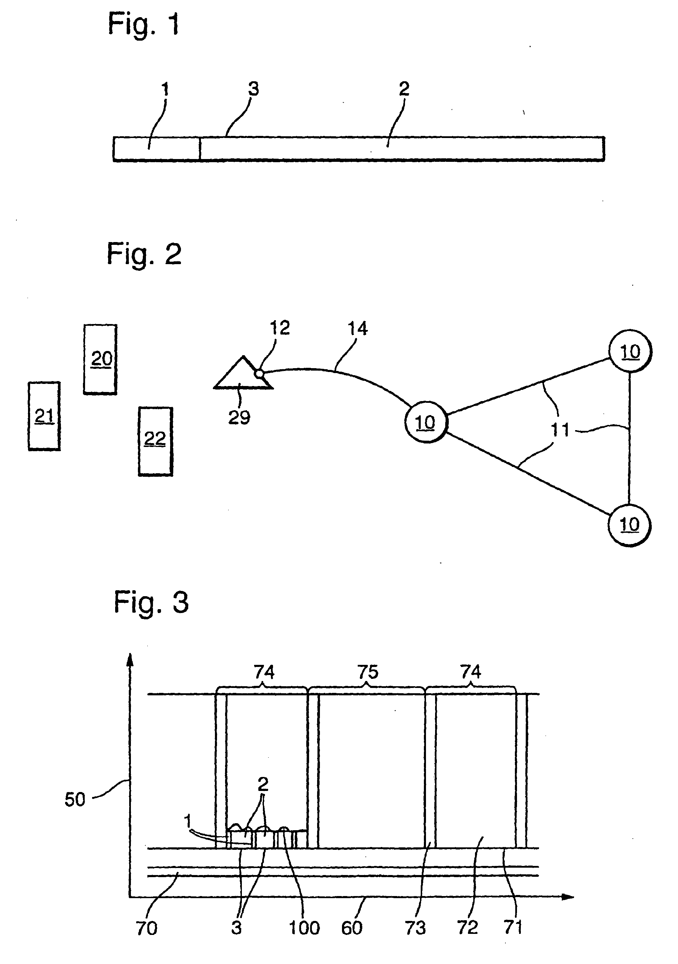

In Figur 1 ist eine Zelle 3 gezeigt. Die Zelle 3 besteht aus einem Paket 2 und einem Header 1.

Die Zelle 3 in Figur 1 ist ein Beispiel für eine Informationseinheit für ein paketgestütztes Übertragungsverfahren von Daten. Im hier gewählten Ausführungsbeispiel ist die Zelle 3 eine ATM-(Asynchronous Transfer Mode)Zelle, bei welcher das Paket 2 48 Byte an Nutzinformation umfaßt, und der Header 5 Byte übertragungsrelevante Information.

In Figur 2 ist ein Breitbandnetz gezeigt, in welchem ATM-Zellen übertragbar sind. Das Übertragungsnetz besteht aus drei Netzknoten 10, welche über Netzleitungen 11 verbunden sind. Weiterhin ist eine stationäre Einheit 29 gezeigt, welche über einen Anschluß 12 verfügt. Die stationäre Einheit 29 ist über den Anschluß 12 und eine Netzanschlußleitung 14 mit einem der Netzknoten 10 verbunden. Weiterhin ist eine mobile Einheit 20, eine zweite mobile Einheit 21 und eine dritte mobile Einheit 22 gezeigt.

Die mobilen Einheiten 20, 21, 22 sind als Sende/Empfangseinheiten ausgebildet, welche mit der stationären Einheit 29 in Funkverbindung stehen. Die stationäre Einheit 29 beinhaltet einerseits eine Sende-/Empfangseinheit, welche mit mobilen Einheiten 20, 21, 22 einen Funkkontakt herstellen kann, andererseits verfügt sie auch über einen Anschluß 12, über welchen sie mit dem Netzknoten 10 in eine leitungsgebundene Verbindung treten kann.

In Figur 3 ist die Frequenz- und Zeiteinteilung eines Funkbands gezeigt, wie sie zur Datenübertragung zwischen den mobilen Einheiten 20, 21, 22 und der stationären Einheit 29 aus Figur 2 benutzt werden kann. Hierbei ist in vertikaler Richtung die Frequenzachse 50 aufgetragen, in horizontaler Richtung die Zeitachse 60. Die Funkverbindung erfolgt einerseits über einen Breitbandkanal 71, andererseits über einen schmalbandigen Signalisierungskanal 70, der bei niedrigerer Frequenz angeordnet ist. Der Breitbandkanal 71 besteht aus einer abwechselnden Anordnung eines Nutzdatenschlitzes 71 und eines Signaldatenschlitzes 73, wobei im hier gewählten Ausführungsbeispiel der Nutzdatenschlitz 72 den sehr viel größeren zeitlichen Raum einnimmt. In einem der Nutzdatenschlitze 72 sind vier ATM-Zellen 3 angedeutet, wiederum besteht jede ATM-Zelle 3 aus einem Header 1 und einem Paket 2. Die Zellen 3 sind zeitlich aufeinanderfolgend angeordnet, wobei jede Zelle das gesamte nutzbare Frequenzband zu einer bestimmten Zeit benutzt. Wegen der besseren Darstellbarkeit erstrecken sich die Zellen 3 in Figur 3 nicht über den gesamten Frequenzbereich, die gewellte Linie 100 soll die vereinfachte Darstellungsweise symbolisieren.

Das Verfahren soll nun anhand der Figuren 1 bis 3 erläutert werden. Zu diesem Zweck wird als erstes eine genaue logische und physikalische Einteilung der Funkkanäle in Figur 3 beschrieben. Im schmalbandigen Signalisierungskanal 70 sendet die stationäre Einheit 29 ihre Kennung aus. Der Breitbandkanal 71 besteht aus einer wechselweisen Abfolge von Nutzdatenschlitzen 72 und Signalisierungsdatenschlitzen 73, wobei im hier gewählten Ausführungsbeispiel noch eine weitere Unterscheidung getroffen werden muß. In einem ersten Paar aus Signalisierungsdatenschlitz 73 und Nutzdatenschlitz 72, welches in Figur 3 mit dem Bezugszeichen 74 versehen ist, werden Daten von der stationären Einheit 29 ausgesandt. Das Segment des Breitbandkanals 71, welches von der stationären Einheit 29 ausgefüllt wird, wird im folgenden Downschlitz 74 genannt. Im Signalisierungsdatenschlitz 73 des Downschlitzes 74 sendet die stationäre Einheit 29 Daten aus, welche zur Verwaltung der drahtlosen Übermittlung dienen. Zu diesen Daten zählt beispielsweise die Zuteilung von Sendezeit an die mobilen Einheiten 20, 21, 22. Auf die Bedeutung dieser Zuteilung soll im nächsten Abschnitt eingegangen werden. Der Nutzdatenschlitz 72 des Downschlitzes 74 besteht aus einer Abfolge von ATM-Zellen 3. Jede dieser ATM-Zellen kann von einem anderen Datensender stammen und für einen anderen Datenempfänger bestimmt sein. Diese Information ist im Header 1 einer jeden Zelle 3 festgelegt. Gemeinsam ist allen Zellen 3, daß sie während dieses Downschlitzes 24 von der stationären Einheit 29 ausgesandt werden, und von den mobilen Einheiten 20, 21, 22 empfangbar sind. Es sei in diesem Zusammenhang darauf hingewiesen, daß der Datensender nicht notwendiger Weise die stationäre Einheit 29 sein muß. Beispielsweise ist es vorstellbar, daß der Datensender ein Netzknoten 10 ist, der eine aus einer ATM-Zelle bestehende Nachricht in die mobile Einheit 21 senden will. Diese ATM-Zelle wird über die Netzanschlußleitung 14 an die stationäre Einheit 29 übermittelt, und dann als eine ATM-Zelle im Strom von ATM-Zellen im Downschlitz 74 ausgesandt. Im Header der soeben besprochenen ATM-Zelle wäre als Datensender der Netzknoten 10 und als Datenempfänger die mobil Einheit 21 vermerkt.

Auf den Downschlitz 74 folgt der Upschlitz 75, welcher ebenfalls aus einem Signalisierungsdatenschlitz 73 und einem Nutzdatenschlitz 72 besteht. Der Signalisierungsdatenschlitz 73 des Upschlitzes 75 stellt die Übertragungskapazität der Nachricht von den mobilen Einheiten 20, 21, 22 an die stationäre Einheit 29, welche die Verwaltung des Funkverkehrs zwischen den mobilen Einheiten und der stationären Einheit betreffen, zur Verfügung. Als solche Nachrichten seien hier beispielsweise genannt, die Einbuchung, ein Request to communicate oder ein Request to send. Unter Einbuchung wird eine kurze Signalisierung seitens der mobilen Einheit 20, 21, 22 verstanden, daß sie sich im Sende- und Empfangsgebiet der stationären Einheit 29 befindet. Request to send bezeichnet die Meldung, einen Datensatz mit einer bestimmten Länge und einer bestimmten Dringlichkeitsstufe an die stationäre Einheit 29 übermitteln zu wollen. Request to communicate beinhaltet die Anforderung, eine bidirektionale Funkverbindung zwischen einer mobilen Einheit und der stationären Einheit mit einer bestimmten Übertragungsrate aufzubauen. Auf den Signalisierungsdatenschlitz 73 des Upschlitzes 75 folgt der Nutzdatenschlitz 72. Dieser besteht wiederum aus einer Abfolge von ATM-Zellen 3, welche in Figur 3 nicht im Detail dargestellt ist. Wiederum kann jede Zelle 3 von einem anderen Datensender stammen und für einen anderen Datenempfänger bestimmt sein. Es ist jedoch hervorzuheben, daß im Upschlitz 75 der Strom von Zellen 3 nicht kontinuierlich sein muß. So ist es beispielsweise vorstellbar, daß einige Zellen fehlen, diese Lücken, welche in einem drahtgebundenen ATM-Netz mit sogenannten IDLE-Zellen aufgefüllt würden, können im Upschlitz durch allgemeine Sendepausen mit einer genau definierten Länge ausgefüllt werden. Dies ist insbesondere sinnvoll, wenn die mobilen Einheiten 20, 21, 22 einen effizienten Stromsparmechanismus aufweisen sollen. Gemeinsam ist allen Zellen 3 im Nutzdatenschlitz 72 des Upschlitzes 75, daß sie von einer der mobilen Einheiten 20, 21, 22 ausgesandt wurden. Der exakte Zeitpunkt, zu welchem eine bestimmte mobile Einheit Zellen innerhalb des Upschlitzes 75 aussenden darf, wird von der stationären Einheit 29 festgelegt und im hier gewählten Ausführungsbeispiel im Signalisierungsdatenschlitz 73 des Downschlitzes 74 übermittelt.

Gleichzeitig sendet die stationäre Einheit 29 ihre Stationskennung auf dem schmalbandigen Signalisierungskanal 70. Diese Aufteilung ermöglicht einen effizienten Stromsparmodus. Mobile Einheiten 20, 21, 22 können beispielsweise nach einer bestimmten Zeit ohne aktive Teilnahme an einer Datenübertragung in einen Stromsparmodus verfallen, in welchem Sende- und Empfangsfunktionalität für den Breitbandkanal 71 ausgeschaltet werden. Jedoch kann die mobile Einheit weiterhin durch Empfang des schmalbandigen Signalisierungskanals 70 sicherstellen, daß sie sich noch im Sendebereich der stationären Einheit 29 befindet. Darüber hinaus kann über den schmalbandigen Signalisierungskanal 70 die Sende- und Empfangsbereitschaft der mobilen Einheit wieder hergestellt werden.

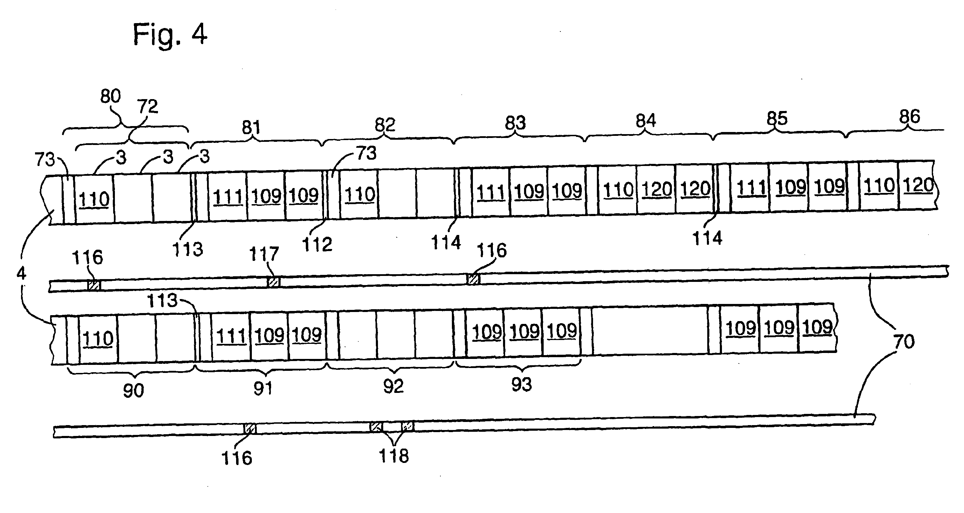

In Figur 4 ist beispielhaft der Zellenstrom gezeigt, der entsteht, wenn die mobile Einheit 20 eine Verbindung mit der stationären Einheit 29 aufrechterhält, wobei die Verbindung eine geringe Übertragungsrate hat. Während dieser Datenübertragung wird die mobile Einheit 21 angeschaltet und bucht sich ein. Darauf sendet die zweite mobile Einheit 21 einmalig eine Datei mit hoher Dringlichkeit ab und geht danach in einen Stromsparmodus über.

In Figur 4 ist ein Breitbandkanal 71 und ein schmalbandiger Signalisierungskanal 70 dargestellt, in welchem die oben beschriebenen Datenübertragungsflüsse vor sich gehen. Wie schon in Figur 3 gezeigt, wechseln sich Downschlitze 74 und Upschlitze 75 ab. Sowohl der Downschlitz 74 als auch der Upschlitz 75 weisen einen Signalisierungsdatenschlitz 73 auf, welcher von einem Nutzdatenschlitz 72 gefolgt wird. Der Nutzdatenschlitz 72 wiederum beinhaltet im hier gezeigten Beispiel drei Zellen 3. Es ist jedoch auch vorstellbar, daß Upschlitz 75 und Downschlitz 74 eine unterschiedliche Zahl von Zellen beinhalten, ebenso ist es auch vorstellbar und vorgesehen, mehr Zellen 3, beispielsweise 10 bis 70, an einem Nutzdatenschlitz 72 zusammenzufassen. Die geringe Zahl von Zellen 3 pro Nutzdatenschlitz 72 wurde in Figur 4 wegen der besseren Darstellbarkeit gewählt. Einzelne Zellen 3 werden hier, je nach Inhalt, unterschiedlich bezeichnet. Die erste Zelle 110 beinhaltet Nachrichten, die von der Mobileinheit 20 ausgesandt werden. Die zweite Zelle 111 beinhaltet Nachrichten, welche von er stationären Einheit 29 ausgesandt werden, die dritte Zelle 109 ist eine IDLE-Zelle und die vierte Zelle 120 beinhaltet Nachrichten von der mobilen Einheit 21. Weiterhin werden in den Signalisierungsschlitzen Nachrichten übertragen. Eine erste Nachricht 113 wird von der stationären Einheit 29 ausgesandt und hat den Inhalt "erste Zelle für Mobileinheit 20". Eine zweite Nachricht 114 hat den Inhalt "erste Zelle Mobileinheit 20, zweite Zelle Mobileinheit 21, dritte Zelle Mobileinheit 22". Eine dritte Nachricht 112, welche von der Mobileinheit 21 ausgesandt wird, hat den Inhalt "Request to send von Mobileinheit 21, dringend, vier Zellen". Auf dem schmalbandigen Signalisierungskanal 70 liegen zwei Nachrichten vor, die von der Stationären Einheit 29 ausgesandte Kennung 116 und die von der Mobilen Einheit 21 ausgesandte Einbuchung 117 sowie Stromsparsignal 118.

Im in Figur 4 betrachteten Datenstrom auf dem Breitbandkanal 71 werde als erstes ein erster Upschlitz 80 betrachtet. In dessen Signalisierungsdatenschlitz 73 werden keinerlei Nachrichten versendet, der Nutzdatenschlitz 72 besteht aus einer ersten Zelle 110, welche von der mobilen Einheit 20 ausgesandt wurde, gefolgt von einer Sendepause, welche zwei Zellenlängen andauert. Auf dem schmalbandigen Signalisierungskanal sendet die Stationäre Einheit eine Kennung 116. Diese Aussendung der Kennung 116 wird im weiteren Verlauf periodisch wiederholt. Darauf folgt ein erster Downschlitz 81, in dessen Signalisierungsdatenschlitz die von der stationären Einheit 29 ausgesandte erste Nachricht 113 steht. Diese Nachricht teilt der Mobileinheit 20 die erste Zelle im nächsten Upschlitz, dem dritten Upschlitz 84 zu. Der Nutzdatenschlitz besteht im zweiten Downschlitz 83 aus einer zweiten Zelle 111, welche von der stationären Einheit 29 ausgesandt wird und für die Mobileinheit 20 bestimmt ist, gefolgt von zwei IDLE-Zellen 109. Während der selben Zeit, etwa während der Aussendung der zweiten Zelle 111, wurde die Mobile Einheit eingeschaltet. Während der Aussendung der IDLE-Zellen sendet sie nun die Einbuchung 117 aus, die von der stationären Einheit 29 empfangen wird. Im nun folgenden dritten Upschlitz 84 wird im Signalisierungsdatenschlitz 73 eine dritte Nachricht 112 von der zweiten mobilen Einheit 21 ausgesandt, in welcher die zweite mobile Einheit 21 ankündigt eine dringende Nachricht absetzen zu wollen. Die hierauf folgenden Nutzdaten enthalten wiederum eine erste Zelle, welche von der mobilen Einheit 20 ausgesandt wurde, gefolgt von einer Sendepause, welche zwei Zellenlängen andauert. Im darauf folgenden dritten Downschlitz 85 ist im Signalisierungsdatenschlitz eine zweite Nachricht 114 enthalten, welche der mobilen Einheit 20 und der zweiten Mobileinheit 21 feste Zeitpunkte zum Aussenden ihrer Zellen zuweist. Darauf folgen wiederum eine zweite Zelle 111, welche für die mobile Einheit 20 bestimmt ist, sowie zwei IDLE-Zellen 109. Im darauf folgenden dritten Upschlitz 84 werden keine Signalisierungsdaten von den mobilen Einheiten ausgesandt. Der Nutzdatenschlitz beinhaltet eine erste Zelle, welche von der mobilen Einheit 21 ausgesandt wurde, sowie zwei vierte Zellen 120, die von der mobilen Einheit 21 ausgesandt wurden. Der dritte Downschlitz 85 und der vierte Upschlitz 86 stellen eine Wiederholung der Schlitze 83 und 84 dar, welche solange andauern kann, bis entweder zusätzliche Nachrichten übertragen werden müssen oder eine Nachrichtenübertragung beendet ist. Der fünfte Upschlitz 90 entspricht wiederum dem ersten Upschlitz 80, die Datenübertragung von der zweiten mobilen Einheit 21 wurde inzwischen abgebrochen. Ebenso entspricht der fünfte Downschlitz 91 dem ersten Downschlitz 81. Die Datenübertragung ist nunmehr beendet, im nächsten Upschlitz 92 werden keine Zellen übertragen, im nächsten Downschlitz 93 werden ausschließlich IDLE-Zellen 109 übertragen. Da keine weitere Datenübertragung stattfindet, können die mobilen Einheiten 20, 21 in einen Stromsparmodus verfallen. Um diesen der Stationären Einheit 29 zu melden, senden beide mobile Einheiten 20, 21 je ein Stromsparsignal 118 ab, welches von der Stationären Einheit empfangen wird. In diesem Stromsparmodus wird die Sende- und Empfangsfunktionalität für das Breitbandsignal 71 abgeschaltet, nicht jedoch für den schmalbandigen Signalisierungskanal 70. Somit können die mobilen Einheiten 20, 21, 22 weiterhin die Stationskennung der stationären Einheit 29 empfangen und somit sicherstellen, daß sie immer noch im Sendebereich dieser stationären Einheit sind.

Außerdem ist es vorgesehen, daß die mobilen Einheiten durch ein von der Stationären Einheit auf dem schmalbandigen Signalisierungskanal ausgesandtes Wecksignal während des Stromsparmodus in den Normalmodus zurückgerufen werden können, beispielsweise, um eine Verbindung herzustellen oder um einlaufende Daten auf dem Breitbandkanal zu empfangen.

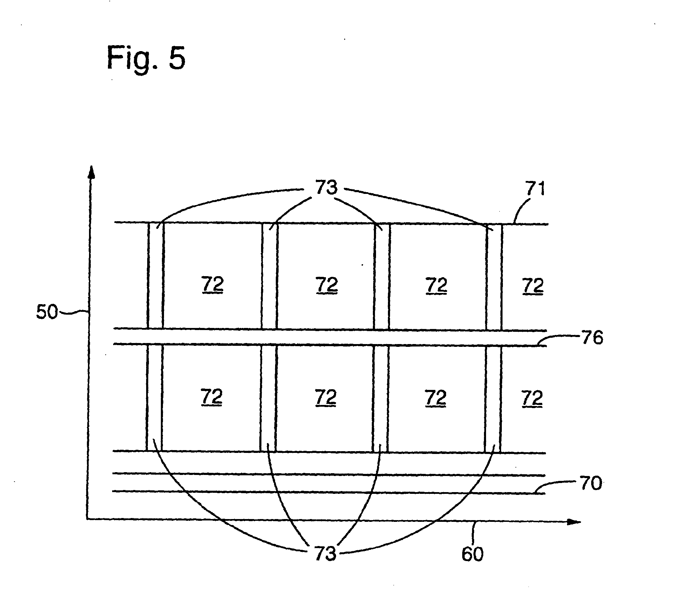

Figur 5 zeigt ein weiteres Ausführungsbeispiel der Erfindung. In derselben Auftragung wie in Figur 3 mit einer Zeitachse 60 und einer Frequenzachse 50 wird ein zweites Kanalschema gezeigt. Wiederum gibt es einen schmalbandigen Signalisierungskanal 70 und einen Breitbandkanal 71, zusätzlich ist jedoch ein zweiter Breitbandkanal 76 vorgesehen. Der Breitbandkanal 71 und der zweite Breitbandkanal 76 sind beide in Nutzdatenschlitze 72 und Signalisierungsdatenschlitze 73 unterteilt, wobei wiederum der Signalisierungsdatenschlitz 73 von deutlich kürzerer zeitlicher Dauer ist als der Nutzdatenschlitz 72.

Die Nutzung des in Figur 5 gezeigten Kanalschemas ist dergestalt, daß wiederum auf dem schmalbandigen Signalisierungskanal 70 Signalisierungsdaten ausgetauscht werden, und auf den Breitbandkanal 71 und dem zweiten Breitbandkanal 76 sowohl Signalisierungsdaten als auch Nutzdaten. Jedoch steht nun beispielsweise der Breitbandkanal 71 die ganze Zeit dem Aussenden von Informationen von der stationären Einheit 29 zur Verfügung, Daten welche von den mobilen Einheiten 20, 21, 22 ausgesandt werden sollen, werden auf dem zweiten breitbandigen Kanal 76 ausgesandt. Die Signalisierungsfunktionen sowie ihre Aufteilung auf den schmalbandigen Signalisierungskanal und die breitbandigen Signalisierungskanäle 71, 76 unterscheiden sich nicht von dem in Zusammenhang mit Figur 3 besprochenen Ausführungsbeispiel.

Die in Figur 3 und Figur 5 dargestellten Ausführungsbeispiele unterscheiden sich durch die Art des Multiplexens ihrer Up- und Downsignale. Hierfür wurde in Figur 3 Zeitmultiplex gewählt, wohingegen in Figur 5 Frequenzmultiplex gewählt wurde. Es ist jedoch auch vorstellbar und vorgesehen, daß auf dem schmalbandigen Signalisierungskanal 70 Signalisierungsinformationen in beide Richtungen übertragen werden. Beispielsweise könnte ein Request to send - Signal, welches in den vorhergehenden Beispielen auf dem breitbandigen Kanal übertragen wurde, auch auf dem schmalbandigen Signalisierungskanal 70 übertragen werden. Ist der schmalbandige Signalisierungskanal 70 ein Kanal für bidirektionale Übertragung von Daten, so besteht ebenfalls wiederum die Möglichkeit, entweder ein Zeitmultiplexverfahren anzuwenden, wobei noch der schmalbandige Signalisierungskanal 70 in Schlitze unterteilt wird, oder auf ein Frequenzmultiplexverfahren zurückzugreifen, wobei der schmalbandige Signalisierungskanal 70 dann in zwei schmalbandige Signalisierungskanäle aufgeteilt würde.

Ebenso ist es vorgesehen, einen schmalbandigen Signalisierungskanal 70 ohne Multiplexing, jedoch für bidirektionale Übertragung auszubilden. Dies ist beispielsweise durchführbar, indem Nachrichten bei Bedarf einfach auf dem schmalbandigen Signalisierungskanal abgesetzt werden. Kollisionen von Nachrichten sind bei diesem Verfahren unvermeidbar, jedoch wird die Integrität einer Nachrichtenübertragung nachträglich überprüft. Dieses Verfahren ist vergleichbar mit einem Verfahren zur Datenübertragung zwischen Computern, dem Ethernet. Der geringeren Effizienz dieses Verfahrens, und daraus resultierend geringeren Bandbreite steht ein vergleichsweise geringer Schaltungsaufwand als Urteil gegenüber. Für die breitbandigen Kanäle 71 und 76 bietet sich dieses Zugriffsverfahren jedoch nicht an, da es dem Ziel, ein breitbandiges drahtloses Übertragungsverfahren anzugeben, entgegenwirkt.

Weitere Abwandlungsmöglichkeiten der Erfindung ergeben sich durch andere Anordnung der Kanäle im Frequenzraum. So ist es durchaus möglich und auch vorgesehen, den Frequenzraum in Abweichung vom in Figur 3 und 5 angegebenen Kanalschema lückenlos mit einem oder mehreren Breitbandkanälen und einem oder mehreren schmalbandigen Signalisierungskanälen auszufüllen. Ebenso ist es möglich und auch vorgesehen, die Frequenzen der schmalbandigen Signalisierungskanäle und der Breitbandkanäle zu vertauschen, so daß beispielsweise ein schmalbandiger Signalisierungskanal zwischen zwei Breitbandkanälen angeordnet ist, oder gar eine höhere Frequenz aufweist als die Breitbandkanäle.

Schließlich ergeben sich weitere Abwandlungsmöglichkeiten bei der Verteilung der Signalisierungsfunktionen auf die Signalisierungsdatenschlitze in den Breitbandkanälen und die schmalbandigen Signalisierungskanäle. Beispielsweise kann die Einbuchung oder erstmalige Anmeldung einer mobilen Einheit bei einer stationären Einheit auch auf einem schmalbandigen Signalisierungskanal erfolgen.

Eine weitere Abwandlungsmöglichkeit des Verfahrens ergibt sich dadurch, daß keine stationäre Einheit 29 vorgesehen ist. Vielmehr übernimmt eine mobile Einheit, beispielsweise die mobile Einheit 20 die Aufgaben der stationären Einheit 29. Die mobile Einheit 20 weist die Kanäle im Upkanal oder im Upschlitz den anderen mobilen Einheiten zu. Gleichzeitig hält sie eine Verbindung, vorzugsweise eine drahtlose Verbindung zu einem Netzknoten 10 aufrecht. Nachrichten, welche vom Netzknoten 10 beispielsweise an die mobile Einheit 21 geschickt werden sollen, werden somit zuerst an die mobile Einheit 20 geschickt, welche sie dann in einem Downschlitz oder im Downkanal an die mobile Einheit 21 weitersendet.

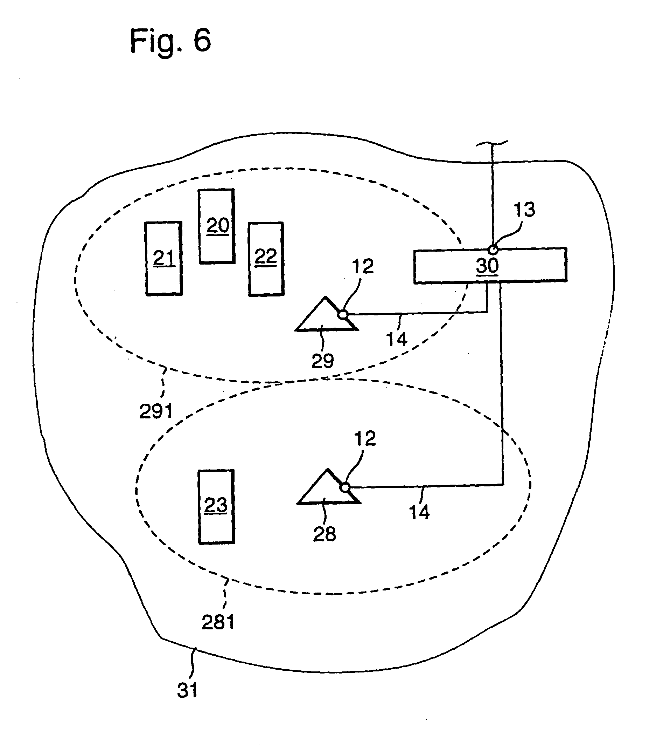

In Figur 6 ist eine Telekommunikationsanlage 31 dargestellt. Die Telekommunikationsanlage 31 weist eine Zentrale 30 auf, welche einen zentralen Anschluß 13 besitzt, über welchen die Zentrale mit weiteren Netzknoten 10, welche nicht in der Figur 6 dargestellt sind, kommunizieren kann. Die Zentrale 30 ist über zwei Netzanschlußleitungen 14 mit einer stationären Einheit 29 und einer zweiten stationären Einheit 28 verbunden. Die stationären Einheiten weisen zu diesem Zweck ein Anschluß 12 auf. Die stationäre Einheit 29 und die zweite stationäre Einheit 28 funktionieren ebenso wie die stationäre 29 in Figur 2. Die Funkreichweite der stationären Einheit 29 definiert eine erste Funkzelle 291, welche in Figur 6 als gestricheltes Oval dargestellt ist. Ebenso definiert die Funkreichweite der zweiten stationären Einheit 28 eine zweite Funkzelle 281. In der ersten Funkzelle 291 befinden sich die mobile Einheit 20, die zweite mobile Einheit 21 und die dritte mobile Einheit 22, in der zweiten Funkzelle 288 befindet sich die vierte mobile Einheit 23.

Die Telekommunikationsanlage 31 bildet ein sogenanntes zellulares System, welches in schon bekannter, beispielsweise von GSM-Netzen, Weise funktioniert. Die Übertragung zwischen Zentrale 30 und einer Mobileinheit 20, 21, 22, 23 findet über eine stationäre Einheit statt, wobei jeweils diejenige stationäre Einheit gewählt wird, über welche der beste Funkkontakt mit der mobilen Einheit herstellbar ist. Beim Übergang einer mobilen Einheit von einer Funkzelle in eine andere Funkzelle muß der Übertragungsweg geändert werden. Dieser Prozeß wird üblicherweise mit Handover bezeichnet. Zum Zwecke des Handover ist das Abhören der Signalisierungen der Stationären Einheiten auf dem schmalbandigen Signalisierungskanal 70 vorteilhaft. Eine mobile Einheit 20, 21, 22, 23 kann somit auch im Stromsparmodus, wenn die Sende- und Empfangsfunktionalität auf dem Breitbandkanal ausgeschaltet ist, erkennen, ob der Empfang über eine andere Basisstation vorteilhaft wäre und einen Handover über den schmalbandigen Signalisierungskanal initiieren. Ebenso ist es vorteilhaft, daß eine der mobilen Einheiten 20, 21, 22, 23 beim Neueintritt in eine Funkzelle oder beim Anschalten der Einheit sich einbucht, das heißt ein Bereitschaftssignal an die nächstliegende stationäre Einheit absendet. Dieses Einbuchen geschieht ebenfalls vorteilhafterweise auf dem schmalbandigen Signalisierungskanal 70, da somit das Einbuchen auch im Stromsparmodus erfolgen kann.

Es soll nicht erfindungswesentlich sein, welche der Signalisierungsfunktionen im einzelnen auf den schmalbandigen Signalisierungskanal 40 verlagert werden, und welche der Signalisierungsfunktionen in einem Signalisierungsschlitz im Breitbandkanal übertragen werden. Es ist jedoch zu berücksichtigen, daß zeitkritische Daten vorteilhafterweise auf den Breitbandkanal übertragen werden, wobei Einbuchung und Basiskennung zur Realisierung eines Stromsparmodus und eines einfachen Handovers vorteilhafterweise auf dem schmalbandigen Signalisierungskanal übertragen werden.

Grundsätzlich auf den schmalbandigen Signalisierungskanal 70 verlagerbar sind folgende Signalisierungsdaten:
1. Kennung der stationären Einheit.
2. Ankündigung von neuen Verbindungswünschen von der stationären Einheit zu einer mobilen Einheit.
3. Ankündigung von Daten für eine bestehende Verbindung zu einer mobilen Einheit, wobei länger keine Daten zu übertragen waren.
4. Einbuchung einer mobilen Einheit.
5. Handover-Wunsch einer mobilen Einheit.
6. Request to send oder Request to communicate, insbesondere beim Aufwachen aus dem Stromsparmodus seitens der mobilen Einheit.
7. Synchronisierungsinformationen.

Es ist ebenfalls vorgesehen, den Upschlitz 75 und den Downschlitz 74 mit variabler Länge zu gestalten, wobei die Länge von der Menge der zu übertragenden Daten abhängt. Insbesondere ist es möglich, einen Signalisierungsdatenschlitz im Downschlitz nur dann vorzusehen, wenn auch tatsächlich Signalisierungsdaten von der stationären Einheit an die mobile Einheit zu übermitteln sind. In diesem Fall ist es vorteilhaft, das Senden eines Signalisierungsschlitzes auf dem schmalbandigen Signalisierungskanal anzukündigen.

Ebenso ist es vorgesehen, nur den Downschlitz mit einem Signalisierungsschlitz zu versehen. Für Signalisierungsdaten von einer mobilen Einheit an die stationäre Einheit stehen -neben dem schmalbandigen Signalisierungskanal- dann zwei breitbandige Wege offen:
1. Das Senden einer regulären ATM-Zelle, wobei der Datenempfänger die stationäre Einheit ist und die 48 byte Nutzdaten die zu übertragende Signalisierungsinformation ist.
2. Das Senden auf einem sogenannten Random-Access-Channel. Der Random Access-Channel besteht aus wenigstens einer Zelle im Upschlitz, welche keiner bestimmten mobilen Einheit zugeteilt wird. Jede mobile Einheit kann in dieser Zeit senden (somit ähnelt dieser Random Access-Channel dem Signalisierungsschlitz im Upschlitz wie er oben beschrieben ist). Aus diesem Grund ist auch die Integrität der Sendung von der mobilen Einheit zu überprüfen.
Eine mobile Einheit kann auf dem Random Access-Channel Zellen im nächsten Upschlitz beantragen, um dann in diesen die eigentliche Signalisierungsinformation zu senden. Die Zahl der Random Access-Channels kann von Upschlitz zu Upschlitz unterschiedlich sein und kann beispielsweise von der stationären Einheit je nach Bedarf festgelegt werden. Duch diese Vorgehensweise ergibt sich eine besonders rationelle Benutzung der Bandbreite.

Schließlich ist es auch vorgesehen, im schmalbandigen Signalisierungskanal zum Übertragen von Nutzdaten für extrem niederratige Dienste zu benutzen. Beispielsweise ist es möglich, nicht benutzte Kapazität im schmalbandigen Signalisierungskanal zur Datenübertragung für ein einfaches Pagingsystem heranzuziehen.

## Patentansprüche

1. Verfahren zur drahtlosen Übertragung von digitalen Nutzdaten, die von einem Datensender stammen und für einen Datenempfänger bestimmt sind, zwischen wenigstens zwei Sende-/ Empfangseinheiten (20, 21, 22, 23, 28, 29), wobei der Datensender und/oder der Datenempfänger von den Sende-/Empfangseinheiten verschieden sein können, und wobei wenigstens ein erster Funkkanal (71) vorgesehen wird, der zur Übertragung aller Pakete dient, und wenigstens ein zweiter Funkkanal (70) zur Übertragung von Informationen, die zum Aufbau der Verbindung zwischen den Sende-/Empfangseinheiten dienen, vorgesehen wird,
**dadurch gekennzeichnet, dass**
die digitalen Nutzdaten in Pakete (2) vorgegebener Länge aufgeteilt werden und mit einem Header (1), der den Datensender und den Datenempfänger enthält, versehen werden, und dass der erste Funkkanal in Nutzdatenschlitze (72) und in Signalisierungsdatenschlitze (73) eingeteilt wird, wobei die Signalisierungsdatenschlitze ebenfalls zur Übertragung von Informationen, die zum Aufbau der Verbindung zwischen den Sende-/Empfangseinheiten dienen, vorgesehen werden.

2. Verfahren nach Anspruch 1, **dadurch gekennzeichnet, dass** als erster Funkkanal ein breitbandiger Funkkanal verwendet wird, und als zweiter Funkkanal ein schmalbandiger Funkkanal verwendet wird.

3. Verfahren nach einem der vorhergehenden Ansprüche, **dadurch gekennzeichnet, dass** die Pakete nach dem ATM-Verfahren gebildet werden.

4. Verfahren nach einem der vorhergehenden Ansprüche, **dadurch gekennzeichnet, dass** die Nutzdatenschlitze (72) zur Übertragung von hochbitratigen Informationen, die zum Aufbau der Verbindung zwischen den Sende-/ Empfangseinheiten dienen, vorgesehen werden und der zweite Funkkanal (70) zur Übertragung von niederbitratigen Informationen, die zum Aufbau der Verbindung zwischen den Sende-/Empfangseinheiten dienen, vorgesehen wird.

5. Verfahren nach Anspruch 4, **dadurch gekennzeichnet, dass** die hochbitratigen Informationen wenigstens eine der folgenden sind:
a.) request to send (112)
b.) Zellenzuteilung (113,114)

6. Verfahren nach Anspruch 4 oder 5, **dadurch gekennzeichnet, dass** die niederbitratigen Informationen wenigstens eine der folgenden sind:
a.) Kennung (116) einer Sende-/Empfangseinheit
b.) Einbuchung (117) einer Sende-/Empfangseinheit
c.) Stromsparsignal (118) einer Sende-/Empfangseinheit
d.) Bitte um Reservierung eines Teils Nutzdatenschlitzes.

7. Telekommunikationsanlage (31) mit wenigstens zwei Sende-/Empfangseinheiten (20, 21, 22, 23, 28, 29) zwischen denen digitale Nutzdaten, die von einem Datensender stammen und für einen Datenempfänger bestimmt sind, drahtlos übertragbar sind, wobei von der Sende-/ Empfangseinheit in einem ersten Funkkanal (71) alle Pakete aussendbar und/oder empfangbar sind, und dass von der Sende-/ Empfangseinheit in einem zweiten Funkkanal (70) Informationen, die zum Aufbau der Verbindung zwischen den Sende-/Empfangseinheiten dienen, aussendbar und/oder empfangbar sind,
**dadurch gekennzeichnet, dass**
die digitalen Nutzdaten in Pakete (2) vorgegebener Länge aufgeteilt und mit einem Header (1), der den Datensender und den Datenempfänger enthält, versehen sind, und dass der erste Funkkanal in Nutzdatenschlitze (72) und in Signalisierungsdatenschlitze (73) eingeteilt ist, wobei die Signalisierungsdatenschlitze ebenfalls zur übertragung von Informationen, die zum Aufbau der Verbindung zwischen den Sende-/Empfangseinheiten dienen, vorgesehen sind.

8. Telekommunikationsanlage nach Anspruch 7,
**dadurch gekennzeichnet, dass** der erste Funkkanal als breitbandiger Funkkanal ausgebildet ist, und der zweite Funkkanal als schmalbandiger Funkkanal ausgebildet ist.

9. Telekommunikationsanlage nach Anspruch 7 oder 8,
**dadurch gekennzeichnet, dass** die Pakete (2) mit dem Header (1) als ATM-Zellen (3) ausgebildet sind.

10. Telekommunikationsanlage nach einem der Ansprüche 7 bis 9,
**dadurch gekennzeichnet, dass** wenigstens eine Sende-/ Empfangseinheit als mobile Einheit (20, 21, 22, 23) ausgebildet ist und eine Sende-/Empfangseinheit als stationäre Einheit (28, 29) ausgebildet ist.

11. Telekommunikationsanlage nach einem der Ansprüche 7 bis 10,
**dadurch gekennzeichnet, dass** die Stationäre Einheit mit einem mit einem Anschluss (12) für eine leitungsgebundene Übertragung versehen ist.

12. Telekommunikationsanlage nach einem der Ansprüche 7 bis 11,
**dadurch gekennzeichnet, dass** eine Zentrale (30) vorgesehen ist, dass die Zentrale mit den stationären Einheiten (28, 29) mit Leitungen (14) verbunden ist, und dass die Zentrale mit den Stationären Einheiten ein Zellulares System bildet.

13. Telekommunikationsanlage nach einem der Ansprüche 7 bis 12,
**dadurch gekennzeichnet, dass** eine Stationäre Einheit einen Sendebereich besitzt, der eine Funkzelle (291,281) definiert, dass eine mobile Einheit (20,21,22,23) von einer Funkzelle in die andere überwechseln kann, und dass dieser Vorgang auf dem zweiten Funkkanal signalisierbar ist.

14. Telekommunikationsanlage nach einem der Ansprüche 7 bis 13,
**dadurch gekennzeichnet, dass** die mobile Einheit (20,21,22,23) abschaltbar und/oder einschaltbar ist, und dass dieser Vorgang auf dem zweiten Funkkanal signalisierbar ist.

15. Telekommunikationsanlage nach einem der Ansprüche 7 bis 14,
**dadurch gekennzeichnet, dass** die Sende- und Empfangsfunktionalität der mobilen Einheit (20,21,22,23) für den ersten Funkkanal abschaltbar ist, und dass dieser Vorgang auf dem zweiten Funkkanal signalisierbar ist.

16. Telekommunikationsanlage nach einem der Ansprüche 7 bis 15,
**dadurch gekennzeichnet, dass** durch die Sende-/ Empfangseinheit eine Kennung (116) auf dem zweiten Funkkanal absendbar ist.

17. Telekommunikationsanlage nach einem der Ansprüche 7 bis 16,
**dadurch gekennzeichnet, dass** die Zentrale mit einem Anschluss (13) für eine leitungsgebundene Übertragung versehen ist, und dass über diese Anschlüsse eine leitungsgebundene Übertragung von Paketen an andere Netzknoten (10) vorgesehen ist.

18. Telekommunikationsanlage nach einem der Ansprüche 7 bis 17,
**dadurch gekennzeichnet, dass** die leitungsgebundene Übertragung von Paketen nach dem ATM-Standard vorgesehen ist.

## Claims

1. A method for the wireless transmission of digital useful data originating from a data transmitter and intended for a data receiver between at least two transmitter/receiver units (20, 21, 22, 23, 28, 29), wherein the data transmitter and/or the data receiver may be different from the transmitter/receiver units, and wherein at least one first radio channel (71) is provided which serves for the transmission of all packets and at least one second radio channel (70) is provided for the transmission of information serving for the establishing of the connection between the transmitter/receiver units,
**characterised in that**
the digital useful data are split into packets (2) of preset length and are provided with a header (1) containing the data transmitter and the data receiver; and **in that** the first radio channel is split into useful data slots (72) and into signalling data slots (73), with the signalling data slots likewise being provided for the transmission of information serving for the establishing of the connection between the transmitter/receiver units.

2. A method in accordance with claim 1, **characterised in that** a broadband channel is used as the first radio channel and a narrow band radio channel is used as the second radio channel.

3. A method in accordance with one of the preceding claims, **characterised in that** the packets are formed using the ATM method.

4. A method in accordance with any one of the preceding claims, **characterised in that** the useful data slots (72) are provided for the transmission of high-bit-rate information serving for the establishing of the connection between the transmitter/receiver units and the second radio channel (70) is provided for the transmission of low-bit-rate information serving for the establishing of the connection between the transmitter/receiver units.

5. A method in accordance with claim 4, **characterised in that** the high-bit-rate information is at least one of the following:
a.) request to send (112)
b.) cell assignment (113,114)

6. A method in accordance with claim 4 or claim 5, **characterised in that** the low-bit-rate information is at least one of the following:
a.) identifier (116) of a transmitter/ receiver unit
b.) logging (117) of a transmitter/ receiver unit
c.) power-saving signal (118) of a transmitter/receiver unit
d.) request to reserve a part of a useful data slot.

7. A telecommunication system (31) having at least two transmitter/receiver units (20, 21, 22, 23, 28, 29) between which digital useful data originating from a data transmitter and intended for a data receiver can be transferred in a wireless manner, wherein all the packets from the transmitter/receiver unit can be transmitted and/or received in a first radio channel (76)and wherein information from the transmitter/ receiver unit serving for the establishing of the connection between the transmitter/ receiver units can be transmitted and/or received in a second radio channel (70),
**characterised in that**
the digital useful data are split into packets (2) of preset length and are provided with a header (1) containing the data transmitter and the data receiver; and **in that** the first radio channel is split into useful data slots (72) and into signalling data slots (73), with the signalling data slots likewise being provided for the transmission of information serving for the establishing of the connection between the transmitter/ receiver units.

8. A telecommunication system in accordance with claim 7, **characterised in that** the first radio channel is made as a broadband radio channel and the second radio channel is made as a narrow band radio channel.

9. A telecommunication system in accordance with one of the claims 7 or 8, **characterised in that** the packets (2) with the header (1) are formed as ATM cells (3).

10. A telecommunication system in accordance with any one of the claims 7 to 9, **characterised in that** at least one transmitter/receiver unit is made as a mobile unit (20, 21, 22, 23) and one transmitter/receiver unit is made as a stationary unit (28, 29).

11. A telecommunication system in accordance with any one of the claims 7 to 10, **characterised in that** the stationary unit is provided with a connection (12) for a line-tied transmission.

12. A telecommunication system in accordance with any one of the claims 7 to 11, **characterised in that** a control centre (30) is provided; **in that** the control centre is connected by lines (14) to the stationary units (28, 29); and **in that** the control centre forms a cellular system with the stationary units.

13. A telecommunication system in accordance with any one of the claims 7 to 12, **characterised in that** a stationary unit has a transmission range defining a radio cell (291, 281); **in that** a mobile unit (20, 21, 22, 23) can change over from one radio cell into the other; and **in that** this procedure can be signalled on the second radio channel.

14. A telecommunication system in accordance with any one of the claims 7 to 13, **characterised in that** the mobile unit (20, 21, 22, 23) can be switched off and/or switched on; and **in that** this procedure can be signalled on the second radio channel.

15. A telecommunication system in accordance with any one of the claims 7 to 14, **characterised in that** the transmission and reception function of the mobile unit (20, 21, 22, 23) for the first radio channel can be switched off; and **in that** this procedure can be signalled on the second radio channel.

16. A telecommunication system in accordance with any one of the claims 7 to 15, **characterised in that** an identifier (116) can be transmitted by the transmitter/receiver unit on the second radio channel.

17. A telecommunication system in accordance with any one of the claims 7 to 16, **characterised in that** the control centre is provided with a connection (13) for a line-tied transmission; and **in that** a line-tied transmission of packets to other network nodes (10) via these connections is provided.

18. A telecommunication system in accordance with any one of the claims 7 to 17, **characterised in that** the line-tied transmission of packets in accordance with the ATM standard is provided.

## Revendications

1. Procédé pour la transmission sans fil de données utilitaires numériques, qui proviennent d'un émetteur de données et sont destinées à un récepteur de données, entre au moins deux unités émettrices/réceptrices (20, 21, 22, 23, 28, 29), dans lesquelles l'émetteur de données et/ou le récepteur de données des unités émettrices/réceptrices peuvent être différents, et dans lequel il est prévu au moins un premier canal radio (71), qui sert à la transmission de tous les paquets, et il est prévu au moins un second canal radio (70) pour la transmission d'informations qui servent à l'établissement de la liaison entre les unités émettrices/réceptrices,
**caractérisé en ce que**
les données utilitaires numériques sont subdivisées en paquets (2) de longueur prédéterminée et sont dotées d'un en-tête (1) qui contient l'émetteur de données et le récepteur de données, et **en ce que** le premier canal radio est organisé en fenêtres de données utilitaires (72) et en fenêtres de données de signalisation (73), et dans lequel les fenêtres de données de signalisation sont également prévues pour la transmission d'informations qui servent à l'établissement de la liaison entre les unités émettrices/réceptrices.

2. Procédé selon la revendication 1, **caractérisé en ce que** l'on utilise à titre de premier canal radio un canal radio à large bande, et **en ce que** l'on utilise à titre de second canal radio un canal radio à bande étroite.

3. Procédé selon l'une des revendications précédentes, **caractérisé en ce que** les paquets sont formés selon la procédure ATM.

4. Procédé selon l'une des revendications précédentes, **caractérisé en ce que** les fenêtres de données utilitaires (72) sont prévues pour la transmission d'informations à haute vitesse, qui servent à l'établissement de la liaison entre les unités émettrices/réceptrices, et le second canal radio (70) est prévue pour la transmission d'informations à basse vitesse, qui servent à l'établissement de la liaison entre les unités émettrices/réceptrices.

5. Procédé selon la revendication 4, **caractérisé en ce que** les informations à haute vitesse sont constituées par l'une au moins des suivantes :
a) requête d'émission (112)
b) attribution de cellules (113, 114).

6. Procédé selon la revendication 4 ou 5, **caractérisé en ce que** les informations à basse vitesse sont constituées par l'une au moins des suivantes :
a) identification (116) d'une unité émettrice/réceptrice
b) enregistrement (117) d'une unité émettrice/réceptrice
c) signal d'économie de courant (118) d'une unité émettrice/réceptrice
d) demande de réservation d'une partie des fenêtres de données utilitaires.

7. Installation de télécommunications (31) comprenant au moins deux unités émettrices/réceptrices (20, 21, 22, 23, 28, 29) entre lesquelles peuvent être transmises des données utilitaires numériques, qui proviennent d'un émetteur de données et sont destinées à un récepteur de données, dans laquelle tous les paquets peuvent être émis et/ou reçus par l'unité émettrice/réceptrice dans un premier canal radio (71), et dans laquelle des informations qui servent à l'établissement de la liaison entre les unités émettrices/réceptrices peuvent être émises et/ou reçues par l'unité émettrice/réceptrice dans un second canal radio (70),
**caractérisée en ce que**
les données utilitaires numériques sont subdivisées en paquets (2) de longueur prédéterminée, et sont dotées d'un en-tête (1), qui contient l'émetteur de données et le récepteur de données, et **en ce que** le premier canal radio est organisé en fenêtres de données utilitaires (72) et en fenêtres de données de signalisation (73), dans lesquelles les fenêtres de données de signalisation sont également prévues pour la transmission d'informations qui servent à l'établissement de la liaison entre les unités émettrices/réceptrices.

8. Installation de télécommunications selon la revendication 7,
**caractérisée en ce que** le premier canal radio est réalisé en tant que canal radio à large bande, et le second canal radio est réalisé en tant que canal radio à bande étroite.

9. Installation de télécommunications selon la revendication 7 ou 8,
**caractérisé en ce que** les paquets (2) avec l'en-tête (1) sont formés comme des cellules ATM (3).

10. Installation de télécommunications selon l'une des revendications 7 à 9,
**caractérisé en ce qu'**au moins une unité émettrice/réceptrice est réalisée sous forme d'unité mobile (20, 21, 22, 23), et une unité émettrice/réceptrice est réalisée sous forme d'unité stationnaire (28, 29).

11. Installation de télécommunications selon l'une des revendications 7 à 10,
**caractérisée en ce que** l'unité stationnaire est pourvue d'un raccordement (12) pour une transmission filaire.

12. Installation de télécommunications selon l'une des revendications 7 à 11,
**caractérisée en ce qu'**il est prévu une centrale (30), **en ce que** la centrale est reliée par des lignes (14) aux unités stationnaires (28, 29), et **en ce que** la centrale forme avec les unités stationnaires un système cellulaire.

13. Installation de télécommunications selon l'une des revendications 7 à 12,
**caractérisée en ce qu'**une unité stationnaire possède une plage d'émission qui définit une cellule radio (291, 281), **en ce qu'**une unité mobile (20, 21, 22, 23) est capable de passer depuis une cellule radio dans une autre, et **en ce que** ce processus peut être signalisé sur le second canal radio.

14. Installation de télécommunications selon l'une des revendications 7 à 13,
**caractérisée en ce que** l'unité mobile (20, 21, 22, 23) peut être mise en service et/ou hors service, et **en ce que** ce processus peut être signalisé sur le second canal radio.

15. Installation de télécommunications selon l'une des revendications 7 à 14,
**caractérisée en ce que** la fonctionnalité d'émission et de réception des unités mobiles (20, 21, 22, 23) peut être coupée pour le premier canal radio, et **en ce que** ce processus peut être signalisé sur le second canal radio.

16. Installation de télécommunications selon l'une des revendications 7 à 15,
**caractérisée en ce qu'**une identification (116) peut être envoyée par l'unité émettrice/réceptrice sur le second canal radio.

17. Installation de télécommunications selon l'une des revendications 7 à 16,
**caractérisée en ce que** la centrale est pourvue d'un raccordement (13) pour une transmission filaire, et **en ce qu'**il est prévu, via ces raccordements, une transmission filaire de paquets vers d'autres noeuds de réseau (10).

18. Installation de télécommunications selon l'une des revendications 7 à 17,
**caractérisé en ce que** la transmission filaire de paquets est prévue selon la norme ATM.
